# DEMANDE DE BREVET EUROPEEN

(11) **EP 1 408 470 A2**
(43) Date de publication de la demande: **14.04.2004**
(21) Numéro de dépôt: 03292477.1
(22) Date de dépôt: 08.10.2003
(51) Int. Cl.: G09B 19/00

(54) **Véhicule pédagogique pour le secours routier**

(30) Priorité: 08.10.2002 FR 0212453
(71) Demandeur: Losfeld, Jean-Nicolas, 25700 Valentigney (FR)
(72) Inventeur: Losfeld, Jean-Nicolas, 25700 Valentigney (FR)
(74) Mandataire: Nithardt, Roland

(57) **Abrégé**

La présente invention concerne un véhicule économique, modulable, sécurisé, propre, utilisable de manière répétitive sans limitation, permettant l'enseignement du secours routier dans des conditions optimales proches des conditions réelles.

Ce véhicule (10) pédagogique est caractérisé en ce qu'au moins les montants latéraux (13) et le pavillon (15) sont des parties amovibles pouvant être montées et démontées manuellement. Ces parties amovibles (13, 15) sont couplées entre elles et aux parties fixes de la carrosserie (11) par des moyens d'assemblage rapide dans des zones de jonction (A-D) positionnées dans les zones de coupe préconisées en cas de désincarcération dudit véhicule. Le châssis (12) de ce véhicule (10) est scindé en deux parties (12a, 12b) articulées entre le train avant et le train arrière pour pouvoir écarter le tableau de bord des sièges avant et faciliter l'extraction des personnes assises à l'avant du véhicule, notamment en cas de choc frontal simulé.

Application : Formation des personnes au secours routier.

## Description

La présente invention concerne un véhicule pédagogique pour le secours routier notamment pour l'initiation et l'apprentissage des gestes de désincarcération de véhicules et d'extraction de personnes de ces véhicules.

Le secours routier couvre différentes interventions et notamment la désincarcération de véhicules accidentés dans le but de secourir et d'extraire les victimes prisonnières des tôles de leur véhicule. Ces interventions sont habituellement effectuées par des sapeurs pompiers. A cet effet, des programmes de formation des intervenants potentiels ont été élaborés. Dans le cadre de ces formations, les deux modules sont traités indépendamment : à savoir la désincarcération du véhicule et le secours aux victimes. Le centre chargé de la formation doit, par conséquent, s'approvisionner en véhicules épaves, qui ne peuvent être utilisés qu'une seule fois. Cette contrainte impose, pour chaque nouvelle formation, de prévoir l'acquisition de ces véhicules épaves, leur transport jusqu'au lieu de la formation puis leur évacuation vers une casse ou une unité de recyclage en fin de formation. De plus, ces véhicules épaves doivent être préparés, protégés et nettoyés pour pouvoir assurer une formation en toute sécurité pour les intervenants. Il convient notamment de vidanger les réservoirs avant l'intervention, de protéger les parties coupantes et de maîtriser les coussins gonflables de sécurité appelés communément "airbags" pendant l'intervention et d'enlever les débris de verre après l'intervention. Ces opérations complémentaires alourdissent sensiblement la formation et obligent à gérer des déchets et notamment à récupérer les huiles et le carburant pour éviter tout risque de pollution. Par conséquent, les coûts et les pertes de temps sont relativement importants pour chaque formation. De plus, les conditions de formation ne sont pas représentatives de la réalité étant donné que les véhicules épaves ne sont pas des véhicules récents de nouvelle génération. Il est connu que les technologies utilisées dans l'industrie automobile évoluent sans cesse en vue d'améliorer la sécurité des occupants, notamment par le choix des matières, des sections de profilés, des renforts pour rigidifier les zones de "rupture" de la carrosserie, pour protéger davantage l'habitacle, etc. Ces zones de "rupture" sont notamment les zones de jonction des montants avant, latéraux et arrière avec le pavillon, le châssis, la barre anti-écartèlement à la base du pare-brise et les panneaux de custode du véhicule. Ainsi, l'emplacement des zones de coupe utilisées en désincarcération pour les véhicules récents change pour éviter les parties renforcées de la carrosserie.

On connaît de la publication DE-A-199 22 985 un véhicule roulant dont les ouvrants (portes latérales, pavillon, coffre) sont couplés à la carrosserie par des charnières démontables en vue de faciliter la sortie des occupants du véhicule en cas d'accident ou de faciliter l'accès des secouristes à l'intérieur du véhicule. Les zones démontables sont localisées à l'emplacement des charnières habituelles des ouvrants et non dans les zones de désincarcération préconisées. De plus, en cas d'accident, ces charnières peuvent se déformer et empêcher le démontage de l'ouvrant. Cette solution n'est donc pas satisfaisante et ne convient pas à la réalisation d'un véhicule non roulant à vocation pédagogique.

La présente invention vise à apporter une solution économique, modulable, sécurisée, propre, utilisable sans limitation, permettant l'enseignement du secours routier dans des conditions optimales proches des conditions réelles.

Dans ce but, l'invention concerne un véhicule pédagogique du genre indiqué en préambule, caractérisé en ce que la carrosserie dudit véhicule comporte des parties amovibles agencées pour être montées et démontées manuellement, ces parties amovibles étant couplées entre elles et aux parties fixes de ladite carrosserie par des moyens d'assemblage rapide dans des zones de jonction, ces zones de jonction étant positionnées dans les zones de coupe préconisées en cas de désincarcération dudit véhicule, les parties amovibles comportant au moins le pavillon et les montants latéraux dudit véhicule.

Dans une forme de réalisation préférée de l'invention, les moyens d'assemblage rapide comportent au moins une pièce mâle et une pièce femelle agencées pour s'emboîter par une translation, la pièce mâle comportant au moins un tenon et la pièce femelle au moins un orifice apte à recevoir ledit tenon.

Ces moyens d'assemblage rapide peuvent également comporter des moyens de verrouillage, comme par exemple une goupille traversant un tenon à l'arrière d'un orifice quand les pièces mâle et femelle sont emboîtées.

Dans la forme de réalisation préférée, les zones de jonction définissent chacune un plan et les plans de deux zones de jonction opposées de chaque partie amovible sont avantageusement sécants à l'intérieur du véhicule.

Le châssis du véhicule est, avantageusement, scindé en au moins deux parties entre le train avant et le train arrière dudit véhicule, ces parties étant agencées pour être mobiles l'une par rapport à l'autre de manière à faciliter l'extraction des personnes assises à l'avant du véhicule.

De préférence, les parties mobiles du châssis sont assemblées par une armature de renfort rapporté sous ledit châssis, cette armature comportant au moins une articulation d'axe transversal disposé sensiblement à l'arrière des roues avant.

Le véhicule peut comporter des moyens de déclenchement à distance couplés au circuit d'air comprimé des coussins gonflables de sécurité avant et/ou latéraux et au moins une boîte à fumée disposée sous le capot pour simuler les feux d'habitacle.

La présente invention et ses avantages apparaîtront mieux dans la description suivante d'un mode de réalisation, donné à titre d'exemple non limitatif, en référence aux dessins annexés, dans lesquels :
- la figure 1 est une vue de côté éclatée du véhicule selon l'invention,
- la figure 2 est une vue de dessus du véhicule de la figure 1,
- la figure 3 est une vue partielle en coupe du véhicule de la figure 1 montrant un des montants latéraux et ses deux zones de jonction,
- la figure 4 est une vue arrière du véhicule de la figure 1,
- la figure 5 est une vue de dessous du véhicule de la figure 1, et
- la figure 6 est une vue de côté du véhicule de la figure 1, le tableau de bord étant écarté des sièges avant.

En référence aux figures, le véhicule 10 selon l'invention est un véhicule pédagogique pour le secours routier destiné notamment à l'initiation et à l'apprentissage des gestes de désincarcération du véhicule et d'extraction des personnes de ce véhicule. Ce véhicule 10 est particulièrement destiné à la formation de tous les opérateurs susceptibles d'intervenir en secours routier, tels que les sapeurs-pompiers aussi bien privés que publics, les médecins et le personnel infirmier des services médicaux d'urgence, la protection civile, etc. Il peut également trouver une application dans les écoles de conduite pour sensibiliser les futurs conducteurs aux techniques du secours routier.

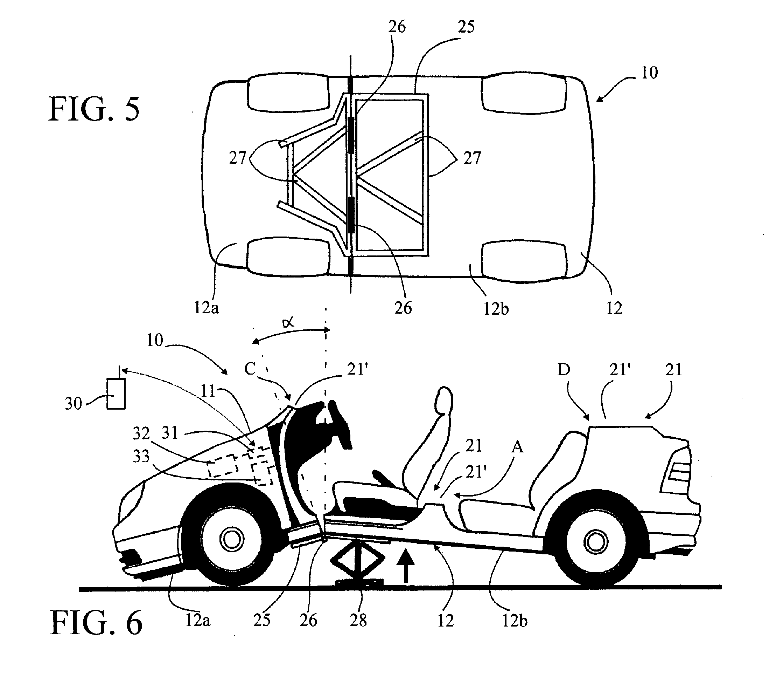

Ce véhicule 10 correspond à un véhicule de série incomplet puisqu'il n'a pas vocation à rouler. Néanmoins, l'équipement intérieur de son habitacle est complet de manière à placer les personnes victimes et/ou les mannequins de simulation dans des conditions réelles. La carrosserie 11 de ce véhicule 10 ainsi que son châssis 12 ont été modifiés pour rendre certaines parties amovibles ou mobiles. Les parties de la carrosserie 11 rendues amovibles correspondent à celles qui doivent être enlevées lors d'une opération de désincarcération du véhicule. Il s'agit notamment des montants latéraux 13 portant les portes arrière 14 et le pavillon 15 du véhicule 10. Bien entendu, ces parties amovibles peuvent varier en fonction du véhicule selon qu'il s'agit d'une berline à trois ou à cinq portes, d'un coupé, d'un véhicule "break" ou "monospace", etc. Dans ce véhicule 10, le pare-brise avant 16 et, au besoin, la lunette arrière 17 ne sont pas collés et sont par exemple réalisés dans une matière synthétique non cassante comme le plexiglas pour pouvoir être retirés aisément du véhicule 10. Les enrouleurs de ceinture de sécurité latéraux (non représentés) sont déplacés sur les montants latéraux 13 pour faciliter le démontage tout en conservant ces éléments de sécurité. De même, les coussins gonflables de sécurité appelés "airbags" (non représentés) sont associés à des moyens de déclenchement à distance facilitant leur utilisation et empêchant tout déclenchement intempestif. En référence à la figure 6, ces moyens de déclenchement à distance comportent par exemple une télécommande 30 permettant d'actionner une électrovanne 31 couplée à une réserve d'air comprimé 32 pour gonfler sélectivement ou simultanément les coussins de sécurité avant et/ou latéraux. Le véhicule 10 peut également être équipé d'une boîte à fumée 33 disposée sous le capot 11 et apte à dégager de la fumée sur commande par exemple au moyen de la télécommande 30 pour simuler un feu d'habitacle.

Les parties amovibles 13, 15 de la carrosserie 11 sont destinées à être montées et démontées manuellement et rapidement, par exemple en moins de cinq minutes. Elles sont couplées entre elles et aux parties fixes de la carrosserie 11 par des moyens d'assemblage rapide 20 dans des zones de jonction A-D. Ces zones de jonction A-D définissant des plans et symbolisent les zones de coupe préconisées en cas de désincarcération du véhicule 10, sachant qu'elles peuvent varier d'un véhicule à l'autre.

Dans l'exemple représenté, les moyens d'assemblage rapide 20 comportent des formes d'emboîtement complémentaires et notamment au moins une pièce mâle 21 et une pièce femelle 22 agencées pour s'emboîter par une translation. La pièce mâle 21 comporte un ou plusieurs tenons 21' et la pièce femelle 22 comporte un ou plusieurs orifices 22' correspondants. Bien entendu d'autres formes d'emboîtement équivalentes peuvent également convenir. Certains moyens d'assemblage rapide 20 peuvent être complétés par des moyens de verrouillage 23 comme par exemple une goupille amovible destinée à être introduite dans un alésage traversant les tenons 21' de la pièce mâle 21 à l'arrière des orifices 22' de la pièce femelle 22 après emboîtement.

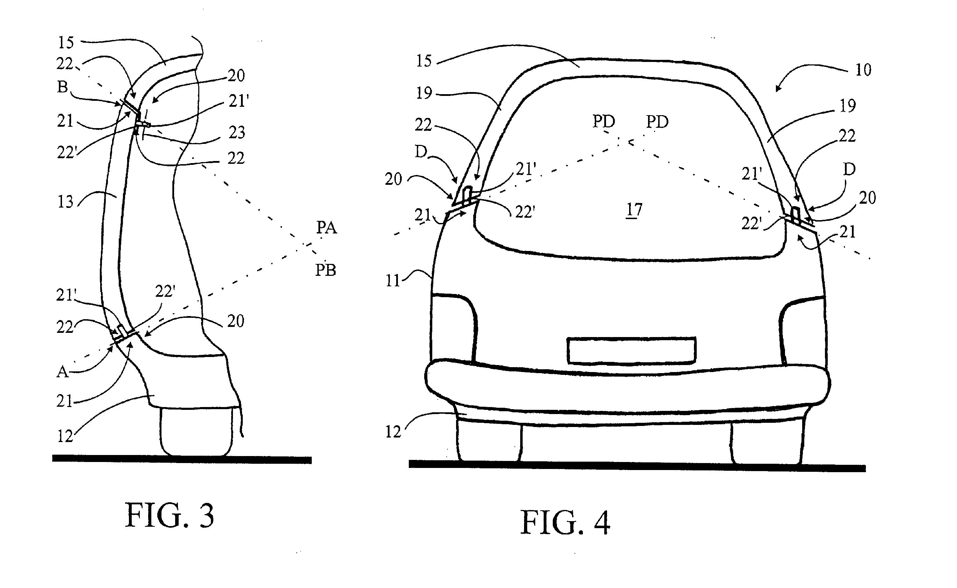

En référence plus particulièrement à la figure 3, dans la zone de jonction A, le bas de caisse du véhicule 10 comporte une pièce mâle 21 formée d'une plaque soudée parallèlement au plan de jonction et pourvue de tenons 21' saillants vers le haut et le montant latéral 13 comporte une pièce femelle 22 formée d'une plaque soudée parallèlement au plan de jonction et pourvue d'orifices 22' aptes à recevoir lesdits tenons 21' suivant une translation sensiblement parallèle à l'axe des tenons 21'. Dans la zone de jonction B, le pavillon 15 comporte une pièce femelle 22 formée d'une plaque en L, dont une des pattes est soudée parallèlement au plan de jonction et l'autre patte s'étend à l'arrière du montant latéral 13 et est pourvue d'orifices 22'. Le montant latéral 13 comporte une pièce mâle 21 formée d'une plaque soudée dans un plan sécant au plan de jonction et pourvue de tenons 21' s'étendant vers l'intérieur du véhicule 10 et aptes à se loger dans lesdits orifices 22' suivant une translation sensiblement parallèle à l'axe des tenons 21'. Le nombre des orifices 22' et des tenons 21' est variable. Il doit être au moins égal à un et de préférence égal à deux. Les deux zones de jonction A et B définissent deux plans PA, PB non parallèles orientés de manière que leur point d'intersection se situe dans le véhicule 10. Cette construction facilite le retrait et la mise en place du montant latéral 13 sans retirer le pavillon 15, assure un auto-centrage du montant latéral 13 par rapport au pavillon 15 et à la caisse du véhicule 10 et surtout assure une rigidité de l'assemblage. Une goupille 23 peut verrouiller les pièces mâle 21 et femelle 22 d'au moins la zone de jonction B.

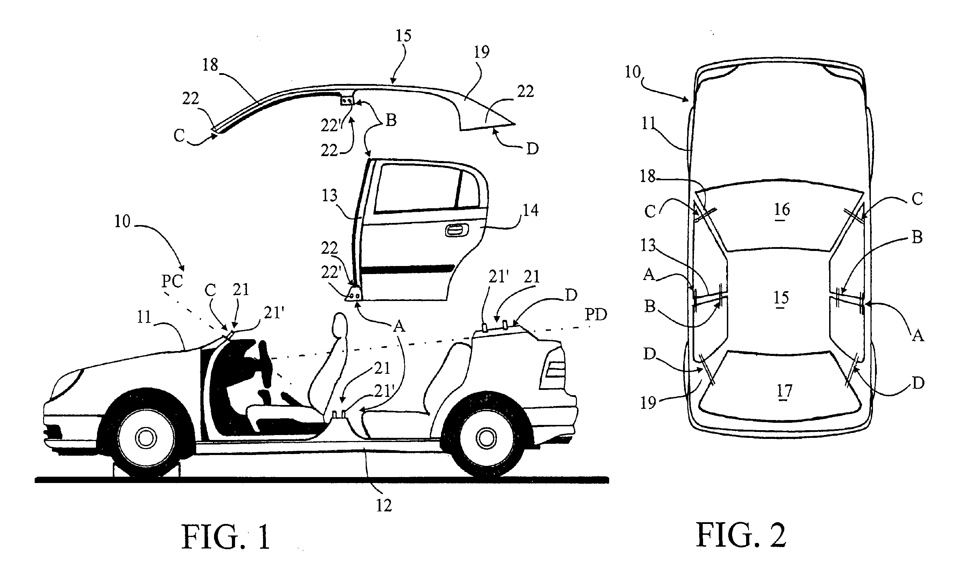

En référence aux figures 1 et 4, le pavillon 15 du véhicule 10 comporte aux extrémités de ses deux montants avant 18 et de ses deux montant arrières 19, qui correspondent aux zones de jonction C et D, quatre pièces femelles 22 formées de plaques soudées parallèlement aux plans de jonction et pourvues d'orifices 22'. En correspondance et dans ces mêmes zones de jonction C et D, la carrosserie 11 du véhicule 10 comportent quatre pièces mâles 21 formées de plaques soudées parallèlement aux plans de jonction et pourvues de tenons 21' saillants vers le haut et aptes à recevoir lesdits orifices 22' suivant une translation sensiblement parallèle à l'axe des tenons 21'. Le nombre des orifices 22' et des tenons 21' est variable. Il doit être au moins égal à un et de préférence égal à deux. Les deux zones de jonction C et D d'un même côté définissent deux plans PC, PD non parallèles orientés de manière que leur point d'intersection se situe dans le véhicule 10 (cf. fig. 1). De même, les plans PD des deux zones de jonction D sont non parallèles et orientés de manière que leur point d'intersection se situe en partie haute du véhicule 10 (cf. fig. 4). Comme avant, cette construction facilite le retrait et la mise en place du pavillon 15, lui assure un auto-centrage par rapport aux parties fixes de la carrosserie 11 et surtout assure une rigidité de l'assemblage. Une goupille 23, schématisée figure 3, peut verrouiller les pièces mâle 21 et femelle 22 d'au moins une des zones de jonction C et D.

En référence aux figures 5 et 6, le châssis 12 de ce véhicule 10 est également modifié. Il est notamment scindé en deux parties 12a, 12b articulées, entre le train avant et le train arrière du véhicule 10. L'objectif de cette modification est de rendre ces deux parties 12a, 12b mobiles l'une par rapport à l'autre de manière à pouvoir ouvrir l'espace entre le tableau de bord et les sièges avant d'un angle α pour faciliter l'extraction des personnes assises à l'avant du véhicule, notamment en cas de choc frontal. Ces deux parties 12a, 12b sont assemblées par une armature de renfort 25 rapportée sous le châssis 12 et comportant une ou plusieurs articulations 26 d'axe transversal disposé sensiblement à l'arrière des roues avant. Cette armature de renfort 25 est formée d'un réseau de tubes 27 métalliques soudés. Cette construction permet de rigidifier le châssis 12 et d'y intégrer les articulations 26 afin de pouvoir écarter, simplement et sans dégradation, le tableau de bord des sièges avant du véhicule 10 à l'aide d'un cric 28 placé sous le châssis 12 du côté opposé aux roues avant du véhicule 10 par rapport à l'axe d'articulation transversal.

La conception de ce véhicule 10 pédagogique permet d'enseigner, dans des conditions optimales, les gestes de secours aux victimes ainsi que les gestes de désincarcération d'un véhicule accidenté quel que soit le choc subit par le véhicule resté sur ses roues. Des mannequins ou des personnes réelles peuvent être placés dans l'habitacle du véhicule 10 et attachés au moyen des ceintures de sécurité. L'équipe de secours aux victimes peut aborder le véhicule 10 pour faire un bilan circonstancié de l'accident et envoyer le cas échéant une personne à l'intérieur pour pratiquer le bilan vital et lésionnel ainsi que les premiers soins d'urgence en cas de nécessité. Ensuite, l'équipe de désincarcération peut simuler les opérations de découpe mais sans utiliser de matériel de découpage, en démontant les parties amovibles du véhicule 10 dans le respect des prescriptions. Ce démontage s'effectue manuellement sans outillage, par exemple dans l'ordre suivant : les portes avant, les montants latéraux 13 avec leur porte arrière 14, le pare-brise 16 et la lunette arrière 17, puis le pavillon 15. Le véhicule 10 est ainsi démonté en moins de cinq minutes. Pendant ce temps, l'équipe des secours prépare et assure le conditionnement des victimes. En cas de simulation de choc frontal, un cric permet de soulever le châssis articulé du véhicule et d'écarter le tableau de bord des sièges avant pour libérer les victimes assises à l'avant. Les simulations de chocs peuvent être combinées au déclenchement des coussins gonflables avant et/ou latéraux commandé à distance par la télécommande 30. De même, un feu d'habitacle peut être simulé grâce à la boîte à fumée 33 également commandée à distance. Ainsi, ce véhicule 10 permet, grâce à sa modularité, de simuler une majorité de cas concrets d'accident dans le but d'assurer une formation la plus complète possible des intervenants potentiels. Quand la formation est terminée, le véhicule 10 est replacé dans sa configuration initiale. Le cric est abaissé, replaçant le châssis à l'horizontal, et les parties amovibles sont remontées en commençant par le pavillon 15, les pare-brise 16 et lunette arrière 17, les montants latéraux 13 avec leur porte arrière 14 et les portes avant. Comme le démontage, le remontage s'effectue à mains nues sans outillage en moins de cinq minutes. Le véhicule 10 est alors prêt pour une nouvelle formation, rapidement, sans déchet, ni pollution et en toute sécurité pour les formateurs et les stagiaires.

Il ressort clairement de cette description que le véhicule 10 de l'invention permet d'atteindre tous les buts fixés. La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Véhicule (10) pédagogique pour le secours routier, notamment pour l'initiation et l'apprentissage des gestes de désincarcération du véhicule et d'extraction des personnes de ce véhicule, **caractérisé en ce que** la carrosserie (11) dudit véhicule (10) comporte des parties amovibles (13, 15) agencées pour être montées et démontées manuellement, ces parties amovibles étant couplées entre elles et aux parties fixes de ladite carrosserie (11) par des moyens d'assemblage rapide (20) dans des zones de jonction (A-D), ces zones de jonction étant positionnées dans les zones de coupe préconisées en cas de désincarcération dudit véhicule (10).

2. Véhicule selon la revendication 1, **caractérisé en ce que** les parties amovibles comportent au moins le pavillon (15) et les montants latéraux (13) dudit véhicule (10).

3. Véhicule selon la revendication 1, **caractérisé en ce que** les moyens d'assemblage rapide (20) comportent au moins une pièce mâle (21) et une pièce femelle (22) agencées pour s'emboîter par une translation.

4. Véhicule selon la revendication 3, **caractérisé en ce que** la pièce mâle (21) comporte au moins un tenon (21) et la pièce femelle (22) comporte au moins un orifice (22) apte à recevoir ledit tenon (21).

5. Véhicule selon la revendication 1, **caractérisé en ce que** les moyens d'assemblage rapide (20) comportent des moyens de verrouillage (23).

6. Véhicule selon les revendications 4 et 5, **caractérisé en ce que** les moyens de verrouillage comportent au moins une goupille (23) agencée pour traverser ledit tenon (21) à l'arrière dudit orifice (22) quand les pièces mâle (21) et femelle (22) sont emboîtées.

7. Véhicule selon la revendication 1, **caractérisé en ce que** les zones de jonction (AD) définissent chacune un plan (PA, PB, PC, PD).

8. Véhicule selon la revendication 7, **caractérisé en ce que** les plans (PA, PB, PC, PD) de deux zones de jonction (A, B et C, D) opposées de chaque partie amovible (13,15) sont sécants à l'intérieur dudit véhicule (10).

9. Véhicule selon la revendication 1, **caractérisé en ce que** le châssis (12) dudit véhicule (10) est scindé en au moins deux parties (12a, 12b), entre le train avant et le train arrière dudit véhicule, ces parties étant agencées pour être mobiles l'une par rapport à l'autre de manière à faciliter l'extraction des personnes assises à l'avant du véhicule.

10. Véhicule selon la revendication 9, **caractérisé en ce que** les parties (12a, 12b) dudit châssis (12) sont assemblées par au moins une articulation (26) d'axe transversal disposé sensiblement à l'arrière des roues avant.

11. Véhicule selon la revendication 10, **caractérisé en ce qu'**il comporte une armature de renfort (25) rapporté sous ledit châssis (12) et comportant ladite articulation (26).

12. Véhicule selon la revendication 1, **caractérisé en ce qu'**il comporte des moyens de déclenchement à distance (30) couplés au circuit d'air comprimé des coussins gonflables de sécurité avant et/ou latéraux.

13. Véhicule selon la revendication 1, **caractérisé en ce qu'**il comporte au moins une boîte à fumée (33) disposée sous le capot (11).
